# EUROPEAN PATENT APPLICATION

(11) **EP 2 512 065 A1**
(43) Date of publication of application: **17.10.2012**
(21) Application number: 10835453.1
(22) Date of filing: 30.11.2010
(51) Int. Cl.: H04L 12/26

(54) **METHOD AND DEVICE FOR NETWORK ACCESS**

(30) Priority: 09.12.2009 CN 200910252440
(71) Applicant: Huawei Device Co., Ltd., Longgang District Shenzhen Guangdong 518129 (CN)
(72) Inventor: LI, Jilin, Shenzhen Guangdong 518129 (CN); HUA, Jin, Shenzhen Guangdong 518129 (CN); WANG, Hongbin, Shenzhen Guangdong 518129 (CN)
(74) Representative: Schmitz, Alexander
(86) International application number: PCT/CN2010/079258
(87) International publication number: WO 2011/069418

(57) **Abstract**

Embodiments of the present invention relate to the field of communication technologies, and disclose a method and device for network access. The method includes: detecting whether a notification message reported by an x digital subscriber line module is received within a set time, wherein the notification message is used for indicating that the x digital subscriber line module is connected to a network successfully; if yes, establishing a connection between a service terminal and the x digital subscriber line module so that the service terminal accesses the network through the x digital subscriber line module; and if no, establishing a connection between the service terminal and a 3G data card module so that the service terminal accesses the network through the 3G data card module. In the embodiments of the present invention switching of network access modes by manual plugging or unplugging is avoided and the network access efficiency of the service terminal is improved; in addition, the device for network access according to the embodiments of the present invention includes an x digital subscriber line module and a 3G data card module and is carried by a user more conveniently

## Description

This application claims priority to Chinese Patent Application No. 200910252440.5, filed with the Chinese Patent Office on December 9, 2009 and entitled "METHOD AND DEVICE FOR NETWORK ACCESS", which is incorporated herein by reference in its entirety.

### FIELD OF THE INVENTION

The present invention relates to the field of communication technologies, and in particular, to a method and device for network access.

### BACKGROUND OF THE INVENTION

At present, an x digital subscriber line (xDSL, x Digital Subscriber Line) module and a 3G data card module are common communication access devices, and provide a single wide area network interface respectively.

The xDSL module is a user access layer in a fixed network and a terminal device on the user side in a broadband network. The xDSL module is connected to a digital subscriber line access multiplexer (DSLAM, Digital Subscriber Line Access Multiplexer) or a broadband remote access server (BRAS, Broadband Remote Access Server) on the network side, provides transmission channels for connected service terminals such as a personal computer and a mobile phone, and provides data, voice, and video services through an operator.

The 3G data card module is a user access layer in a wireless network and a terminal device on the user side in a wireless broadband network. The 3G data card module is connected to a base station device of the wireless network, provides transmission channels for connected service terminals, and provides data, voice, and video services through an operator.

At present, the xDSL module can provide only a single wired manner to connect a service terminal to the network, and the 3G data card module can provide only a single wireless manner to connect the service terminal to the network. A common method to ensure network access of the service terminal and reduce a charge as much as possible is that a user carries both an xDSL module and a 3G data card module at the same time. If the scenario where the user is located allows the service terminal to access the network in both a wired manner and a wireless manner, the user may preferentially use the xDSL module to connect the service terminal to the network, which may reduces the charge; if the scenario where the user is located allows the service terminal to access the network only in the wireless manner, the user may use the 3G data card module to connect the service terminal to the network, and therefore network access of the service terminal is ensured although the charge is high.

In the foregoing method, a user needs to carry both the xDSL module and the 3G data card module at the same time; when switching of network access modes is required, the user needs to perform plugging or unplugging manually, which results in low efficiency of network access; in addition, it is inconvenient to carry both the xDSL module and the 3G data card module at the same time.

### SUMMARY OF THE INVENTION

Embodiments of the present invention provide a method and device for network access, which may implement network access of a service terminal.

To solve the technical problem above, the embodiments of the present invention provide the following technical solutions:
An embodiment of the present invention provides a method for network access, including:
   detecting whether a notification message reported by an x digital subscriber line module is received within a set time, where the notification message is used for indicating that the x digital subscriber line module is connected to a network successfully;
   if yes, establishing a connection between a service terminal and the x digital subscriber line module, so that the service terminal accesses the network through the x digital subscriber line module; and
   if no, establishing a connection between the service terminal and a 3G data card module, so that the service terminal accesses the network through the 3G data card module.
An embodiment of the present invention provides a device for network access, including:
   a detecting module, configured to detect whether a notification message reported by an x digital subscriber line module is received within a set time, where the notification message is used for indicating that the x digital subscriber line module is connected to a network successfully;
   a first establishing module, configured to establish a connection between a service terminal and the x digital subscriber line module when a detection result of the detecting module is that the notification message is received within the set time, so that the service terminal accesses the network through the x digital subscriber line module;
   a second establishing module, configured to establish a connection between the service terminal and a 3G data card module when the detection result of the detecting module is that the notification message is not received within the set time, so that the service terminal accesses the network through the 3G data card module;
   the x digital subscriber line module, configured to report the notification message used for indicating network connection success to the detecting module, when being connected to the network successfully, and after the first establishing module establishes the connection between the service terminal and the x digital subscriber line module, make the service terminal access the network through the x digital subscriber line module; and
   the 3G data card module, configured to make the service terminal access the network through the 3G data card module after the second establishing module establishes the connection between the service terminal and the 3G data card module.

Compared with the prior art, in the embodiments of the present invention, whether to establish a connection between the service terminal and the x digital subscriber line module or to establish a connection between the service terminal and the 3G data card module is determined by detecting whether a notification message reported by the x digital subscriber line module is received within a set time, where the notification message is used for indicating network connection success, so that the service terminal accesses the network through the x digital subscriber line module or 3G data card module. In embodiments of the present invention, switching of network access modes by manual plugging or unplugging is avoided and the network access efficiency of the service terminal is improved; in addition, the device for network access according to the embodiments of the present invention includes an x digital subscriber line module and a 3G data card module and is carried by the user more conveniently.

### BRIEF DESCRIPTION OF THE DRAWINGS

To illustrate the technical solutions in the embodiments of the present invention more clearly, accompanying drawings to be used in the embodiments of the present invention are briefly introduced below. Evidently, the accompanying drawings illustrate only some embodiments of the present invention, and persons of ordinary skill in the art can derive other drawings from these accompanying drawings without any creative effort.
FIG. 1 is a flowchart of a method for network access according to an embodiment of the present invention;
FIG. 2 is a flowchart of another method for network access according to an embodiment of the present invention;
FIG. 3 is a structure diagram of a device for network access according to an embodiment of the present invention; and
FIG. 4 is a structure diagram of another device for network access according to an embodiment of the present invention.

### DETAILED DESCRIPTION OF THE EMBODIMENTS

The technical solutions in the embodiments of the present invention are described clearly and completely with reference to the accompanying drawings. Evidently, the embodiments are only part rather than all of the embodiments of the present invention. Based on the embodiments of the present invention, all other embodiments that persons of ordinary skill in the art can derive without creative efforts fall within the protection scope of the present invention.

In the embodiments of the present invention, if it is detected that a notification message that is reported by an x digital subscriber line module and used for indicating network connection success is received within a set time, a connection between a service terminal and the x digital subscriber line module is established so that the service terminal accesses the network through the x digital subscriber line module; otherwise, if it is detected that the notification message that is reported by the x digital subscriber line module and used for indicating network connection success is not received within the set time, a connection between the service terminal and a 3G data card module is established so that the service terminal accesses the network through the 3G data card module. In this way, switching network access modes by manual plugging or unplugging is avoided, and the network access efficiency of the service terminal is improved.

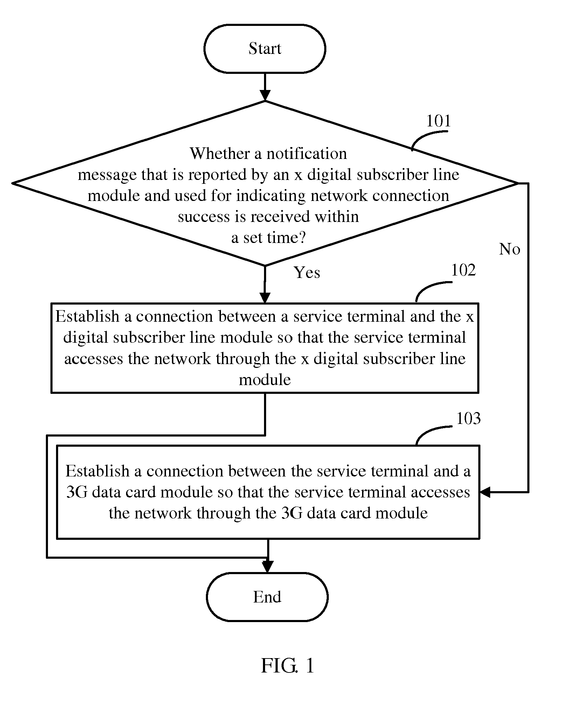

Referring to FIG. 1, FIG. 1 is a flowchart of a method for network access according to an embodiment of the present invention. An x digital subscriber line module involved in the embodiment of the present invention has a function that is the same as that of a conventional x digital subscriber line module; an involved 3G data card module has a function same as that of a conventional 3G data card module. As shown in FIG. 1, the method may include the following steps:
101: Detect whether a notification message that is reported by the x digital subscriber line module and used for indicating network connection success is received within a set time; if yes, perform step 102; if no, perform step 103.

The digital subscriber line involved in the embodiment and subsequent embodiments may be an asymmetrical digital subscriber loop (ADSL, Asymmetrical Digital Subscriber Loop) module or a very high bit rate digital subscriber line (VDSL, Very high bit rate Digital Subscriber Line) module.

There are many types of notification messages that are reported by the x digital subscriber line module and used for indicating network connection success. For example, the x digital subscriber line module may report a high electric level signal "1", indicating network connection success, or the x digital subscriber line may report a low electric level signal "0", indicating network connection success, which does not affect the implementation of the embodiment of the present invention.

102. Establish a connection between a service terminal and the x digital subscriber line module so that the service terminal accesses the network through the x digital subscriber line module.

For example, the connection between the service terminal and the x digital subscriber line module may be enabled by adopting an intelligent switch manner, so that the service terminal accesses the network through the x digital subscriber line module.

103. Establish a connection between the service terminal and the 3G data card module so that the service terminal accesses the network through the 3G data card module.

For example, the connection between the service terminal and the 3G data card module may be enabled by adopting an intelligent switch manner so that the service terminal accesses the network through the 3G data card module.

Further, after step 102 is performed, the method for network access according to the embodiment of the present invention may further include the following step:
If a notification message reported by the x digital subscriber line module is received, where the notification message is used for indicating that the x digital subscriber line module fails to be connected to the network, perform step 103, so that the service terminal accesses the network through the 3G data card module.

In the method for network access according to the embodiment of the present invention, whether to establish a connection between the service terminal and the xDSL module or to establish a connection between the service terminal and the 3G data card module is determined by detecting whether a notification message reported by the xDSL module is received within a set time, where the notification message is used for indicating that the xDSL module is connected to the network successfully, so that the service terminal accesses the network through the xDSL module or 3G data card module. in the embodiment of the present invention switching of network access modes by manual plugging or unplugging is avoided and the network access efficiency of the service terminal is improved.

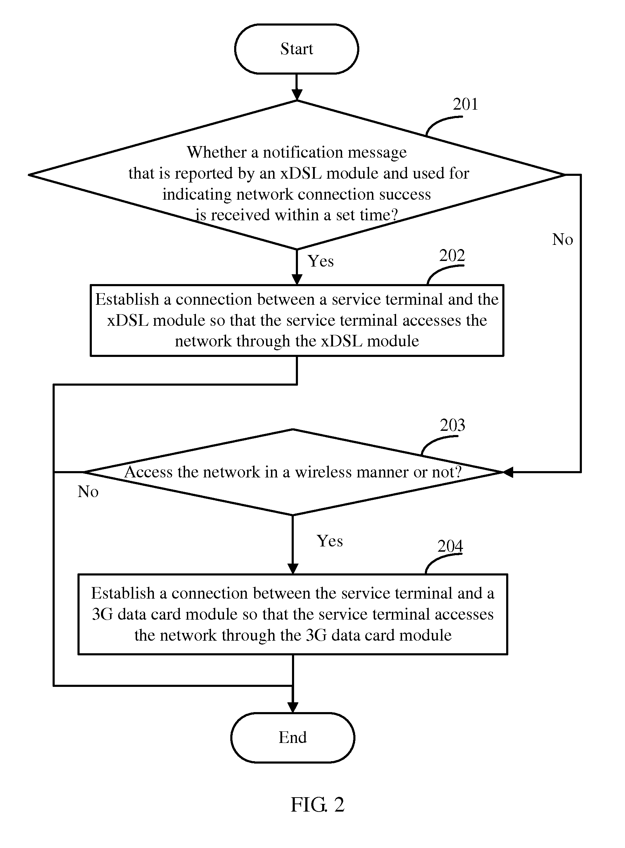

Referring to FIG. 2, FIG. 2 is a flowchart of another method for network access according to an embodiment of the present invention. in this embodiment, an xDSL module is taken for example for introducing the method for network access according to the embodiment of the present invention. As shown in FIG. 2, the method may include the following steps:
201: Detect whether a notification message reported by the xDSL module is received within a set time, where the notification message is used for indicating that the xDSL module is connected to the network successfully; if yes, perform step 202; if no, perform step 203. There are many types of notification messages that are reported by the xDSL module and used for indicating that the xDSL module is connected to the network successfully. For example, the xDSL module may report high electric level signal "1", indicating network connection success, or the xDSL module may report low electric level signal "0", indicating network connection success, which does not affect the implementation of the embodiment of the present invention.
202. Establish a connection between a service terminal and the xDSL module so that the service terminal accesses the network through the xDSL module.

For example, the connection between the service terminal and the xDSL module may be enabled by adopting an intelligent switch manner so that the service terminal accesses the network through the xDSL module.

The intelligent switch may be implemented by adopting a software manner. When the intelligent switch receives a notification message within a set time, where the notification message is reported by the xDSL module and used for indicating network connection success, the intelligent switch may enable a connection between the service terminal and the xDSL module, so that the service terminal may access the network through the xDSL module.

In an embodiment, an intelligent switch that includes but is not limited to the following pseudo code program may be used to enable a connection between the service terminal and the xDSL module:

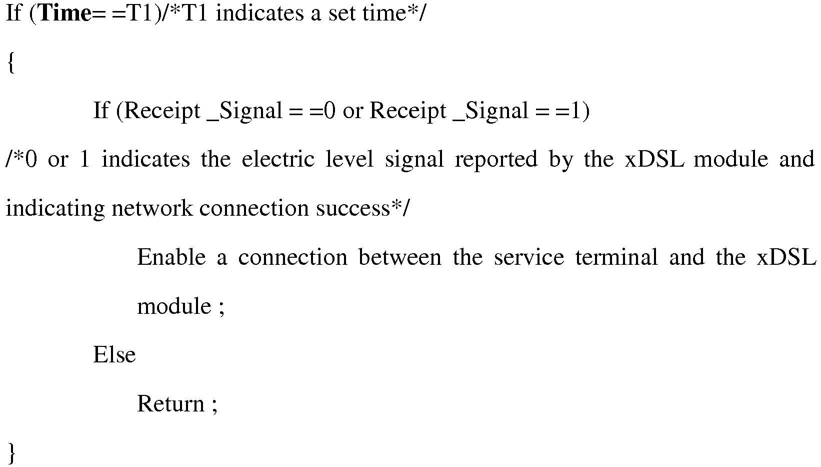

Through the foregoing pseudo code program of the intelligent switch, a connection between the service terminal and the xDSL module may be enabled, so that the service terminal may access the network through the xDSL module.

203: Give, in a page manner, the service terminal a prompt whether the network is to be accessed in a wireless manner, and if yes, that is, if a wireless access confirmation instruction entered by the service terminal is received, perform step 204, or if no, that is, if a non-access confirmation instruction entered by the service terminal is received, end the procedure.

In an embodiment, the prompt whether the network is to be accessed in the wireless manner may be given to the service terminal by adopting a voice or text manner, and if yes, that is, if a wireless access confirmation instruction entered by the service terminal is received, perform step 204, or if no, that is, if a non-access confirmation instruction entered by the service terminal is received, end the procedure.

Generally, wireless network access (that is, network access by using the 3G module) is more costly than network access by using the xDSL module; therefore, it is necessary to give the service terminal the prompt whether the network is to be accessed in the wireless manner, so as to achieve the purpose for respecting a user's selection of an access mode to access the network.

204: Establish a connection between the service terminal and the 3G data card module so that the service terminal accesses the network through the 3G data card module.

For example, the connection between the service terminal and the 3G data card module may be enabled in an intelligent switch manner so that the service terminal accesses the network through the 3G data card module.

The intelligent switch may be implemented by adopting a software manner. When the intelligent switch does not receive a notification message within a set time, where the notification message is reported by the xDSL module and used for indicating network connection success, the intelligent switch may enable a connection between the service terminal and the 3G module, so that the service terminal may access the network through the 3G module.

In an embodiment, an intelligent switch that includes but is not limited to the following pseudo code program may be used to enable a connection between the service terminal and the 3G module:

```
          If (Time==T1)/*T1 indicates a set time*/
           {
                   If (Receipt_Signal != 0 or Receipt_Signal !=1)
          /*0 or 1 indicates the level signal reported by the xDSL module for indicating
          network connection success*/
                       Enable a connection between the service terminal and the 3G
                       module;
                   Else
                       Return ;
           }
```

Through the foregoing pseudo code program of the intelligent switch, a connection between the service terminal and the 3G module may be enabled, so that the service terminal may access the network through the 3G module.

Further, after step 202 is performed, the method for network access according to the embodiment of the present invention may further include the following step:
If a notification message reported by the x digital subscriber line module is received, where the notification message is used for indicating that the x digital subscriber line module fails to be connected to the network, perform step 203.

In this way, even if failure occurs in the process of connecting the service terminal to the network through the x digital subscriber line module, the service terminal may also be automatically switched to connecting the network through the 3G module, so that the connection between the service terminal and the network is not interrupted.

In the method for network access according to the embodiment of the present invention, whether to establish a connection between the service terminal and the x digital subscriber line module or to establish a connection between the service terminal and the 3G data card module is determined by detecting whether a notification message reported by the x digital subscriber line module is received within a set time, where the notification message is used for indicating that the x digital subscriber line module is connected to the network successfully, so that the service terminal accesses the network through the x digital subscriber line module or 3G data card module. In the embodiment of the present invention, switching of network access modes by manual plugging or unplugging is avoided and the efficiency for network access of the service terminal is improved.

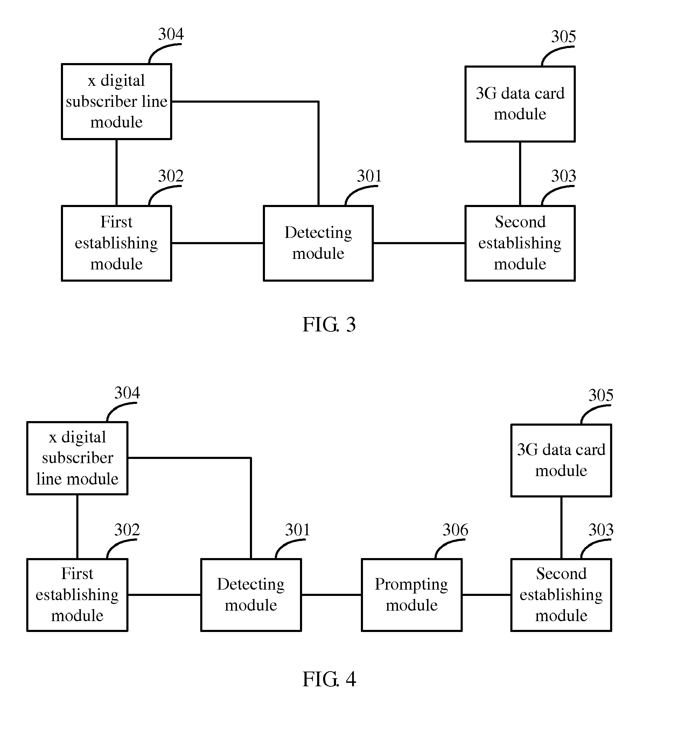

FIG. 3 is a structure diagram of a device for network access according to an embodiment of the present invention. As shown in FIG. 3, the device for network access may include:
a detecting module 301, configured to detect whether a notification message reported by an x digital subscriber line module is received within a set time, where the notification message is used for indicating that the x digital subscriber line module is connected to a network side successfully, where
the x digital subscriber line module involved in the embodiment may be an asymmetrical digital subscriber loop (ADSL, Asymmetrical Digital Subscriber Loop) or very high bit rate digital subscriber line (VDSL, Very high bit rate Digital Subscriber Line) module;
a first establishing module 302, configured to establish a connection between a service terminal and the x digital subscriber line module when the detection result of the detecting module 301 is that the notification message is received within the set time, so that the service terminal accesses the network through the x digital subscriber line module;
a second establishing module 303, configured to establish a connection between the service terminal and a 3G data card module when the detection result of the detecting module 301 is that the notification message is not received within the set time, so that the service terminal accesses the network through the 3G data card module;
an x digital subscriber line module 304, configured to report a notification message used for indicating network connection success to the detecting module 301, when being connected to the network successfully, and after the first establishing module 302 establishes the connection between the service terminal and the x digital subscriber line module 304, make the service terminal access the network through the x digital subscriber line module 304, where there are many types of notification messages that are reported by the x digital subscriber line module 304 and used for indicating network connection success; for example, the x digital subscriber line module 304 may report high electric level signal "1", indicating network connection success, or the x digital subscriber line 304 may report low electric level signal "0", indicating network connection success, or the x digital subscriber line 304 may construct a new notification message carrying an identifier indicating network connection success and report the notification message, which does not affect the implementation of the embodiment of the present invention; and
a 3G data card module 305, configured to make the service terminal access the network through the 3G data card module 305 after the second establishing module 303 establishes the connection between the service terminal and the 3G data card module 305.

For example, the first establishing module 302 may be configured to enable a connection between the service terminal and the x digital subscriber line module 304 by adopting an intelligent switch manner, when the detection result of the detecting module 301 is that the notification message is received within the set time, so that the service terminal accesses the network through the x digital subscriber line module 304.

In an embodiment, the first establishing module 302 may use an intelligent switch implemented by the following pseudo code program to enable a connection between the service terminal and the x digital subscriber line module 304:

```
          If (Time= =T1)/*T1 indicates a set time*/
           {
                   If (Receipt_Signal = =0 or Receipt_Signal = =1)
          /*0 or 1 indicates an electric level signal reported by the x digital subscriber line
          module and indicating network connection success*/
                       Enable a connection between the service terminal and the x digital
                       subscriber line module;
                   Else
                       Return ;
           }
```

By executing the foregoing pseudo code program of the intelligent switch, the first establishing module 302 may enable a connection between the service terminal and the x digital subscriber line module 304, so that the service terminal accesses the network through the x digital subscriber line module 304.

For example, the second establishing module 303 may be configured to enable a connection between the service terminal and the 3G data card module 305 in an intelligent switch manner, when the detection result of the detecting module 301 is that the notification message is not received within the set time, so that the service terminal accesses the network through the 3G data card module 305.

In an embodiment, the second establishing module 303 may use an intelligent switch implemented by the following pseudo code program to enable a connection between the service terminal and the 3G data card module 305:

```
          If (Time= =T1)/*T1 indicates a set time*/
           {
                   If (Receipt_Signal !=0 or Receipt_Signal !=1)
          /*0 or 1 indicates an electric level signal reported by the x digital subscriber line
          module and indicating network connection success*/
                       Enable a connection between the service terminal and the 3G
                       module;
                   Else
                       Return ;
           }
```

Through the foregoing pseudo code program of the intelligent switch, a connection between the service terminal and the 3G module may be enabled, so that the service terminal may access the network through the 3G module.

Further, the detecting module 301 may be configured to notify the second establishing module 303 if a notification message that is reported by the x digital subscriber line module 304 and used for indicating that the x digital subscriber line module 304 fails to be connected to the network is received, after the first establishing module 302 establishes the connection between the service terminal and the x digital subscriber line module 304.

In this case, the second establishing module 303 may be specifically configured to establish a connection between the service terminal and the 3G data card module 304 when the detecting module 301 receives the notification message that is reported by the x digital subscriber line module 304 and used for indicating that the x digital subscriber line module 304 fails to be connected to the network, so that the service terminal accesses the network through the 3G data card module.

The device for network access according to the embodiment of the present invention determines to establish a connection between the service terminal and the x digital subscriber line module or to establish a connection between the service terminal and the 3G data card module, by detecting whether a notification message reported by the x digital subscriber line module is received within a set time, where the notification message is used for indicating network connection success, so that the service terminal accesses the network through the x digital subscriber line module or 3G data card module. In the embodiment of the present invention, switching of network access modes by manual plugging or unplugging is avoided and the network access efficiency of the service terminal is improved; in addition, the device for network access according to the embodiment of the present invention includes an x digital subscriber line module and a 3G data card module and is carried by a user more conveniently. FIG. 4 is a structural diagram of another device for network access according to an embodiment of the present invention. As shown in FIG. 4, compared with the device for network access shown in FIG. 3, another device for network access according to the embodiment of the present invention includes a prompting module 306 additionally.

As shown in FIG. 4, the prompting module 306 is connected to the detecting module 301 and the second establishing module 303 respectively.

The prompting module 306 is configured to give, in a page or voice or text manner, the service terminal a prompt whether the network is to be accessed in a wireless manner, if the detecting module 301 does not receive a notification message within a set time, where the notification message is reported by the x digital subscriber line module 304 and used for indicating network connection success, or if the detecting module 301 receives a notification message that is reported by the x digital subscriber line module 304 and used for indicating that the x digital subscriber line module 304 fails to be connected to the network.

In this case, the second establishing module 303 may be specifically configured to establish a connection between the service terminal and the 3G data card module when the prompting module 306 receives a wireless access confirmation instruction entered by the service terminal, so that the service terminal accesses the network through the 3G data card module. Because network access of the service terminal through the 3G data card module is more costly than network access through the x digital subscriber line module, a prompting module 306 is set to give, in a page manner, the user the prompt whether the network is to be accessed in a wireless manner, which is determined by the user so as to respect a user's personal will.

The another device for network access according to the embodiment of the present invention avoids switching network access modes by manual plugging or unplugging and improves the network access efficiency of the service terminal; in addition, the device for network access according to the embodiment of the present invention includes an x digital subscriber line module and a 3G data card module and is carried by the user more conveniently.

Persons of ordinary skill in the art may understand that all or part of steps in the method embodiments of the present invention may be implemented by a program instructing relevant hardware. The program may be stored in a computer readable storage medium. When the program is executed, the steps of the foregoing method embodiments are included. The storage medium may include a variety of media capable of storing program codes, such as a read only memory (Read Only Memory, ROM), a random access memory (Random Access Memory, RAM), a magnetic disk, or an optical disk.

Detailed introduction above to a method and device for network access is given according to the embodiments of the present invention. Specific examples are used in this application for describing the principle and implementation of the present invention. However, the illustration of the foregoing embodiments is merely intended to facilitate the understanding of the methods and core ideas of the present invention. In addition, with respect to the implementation and applicability of the present invention, modifications and variations may be made by persons of ordinary skill in the art according to the spirit of the present invention. Therefore, the specification shall not be construed as a limitation on the present invention.

## Claims

1. A method for network access, comprising:
detecting whether a notification message reported by an x digital subscriber line module is received within a set time, wherein the notification message is used for indicating that the x digital subscriber line module is connected to a network successfully;
if yes, establishing a connection between a service terminal and the x digital subscriber line module so that the service terminal accesses the network through the x digital subscriber line module; and
if no, establishing a connection between the service terminal and a 3G data card module so that the service terminal accesses the network through the 3G data card module.

2. The method according to claim 1, wherein the establishing a connection between a service terminal and the non-x digital subscriber line module comprises:
enabling a connection between the service terminal and the x digital subscriber line module in an intelligent switch manner.

3. The method according to claim 1, wherein the establishing a connection between the service terminal and a 3G data card module comprises:
enabling a connection between the service terminal and the 3G data card module by in an intelligent switch manner.

4. The method according to claim 1 or 2 or 3, wherein after establishing a connection between the service terminal and the x digital subscriber line module, the method further comprises:
if a notification message reported by the x digital subscriber line module is received, wherein the notification message is used for indicating that the x digital subscriber line module fails to be connected to the network, establishing a connection between the service terminal and the 3G data card module, so that the service terminal accesses the network through the 3G data card module.

5. The method according to claim 4, before establishing a connection between the service terminal and the 3G data card module, further comprising:
giving the service terminal a prompt whether the network is to be accessed in a wireless manner, and if a wireless access confirmation instruction entered by the service terminal is received, performing subsequent steps.

6. A device for network access, comprising:
a detecting module, configured to detect whether a notification message reported by an x digital subscriber line module is received within a set time, wherein the notification message is used for indicating that the x digital subscriber line module is connected to a network successfully;
a first establishing module, configured to establish a connection between a service terminal and the x digital subscriber line module when a detection result of the detecting module is that the notification message is received within the set time, so that the service terminal accesses the network through the x digital subscriber line module;
a second establishing module, configured to establish a connection between the service terminal and a 3G data card module when the detection result of the detecting module is that the notification message is not received within the set time, so that the service terminal accesses the network through the 3G data card module;
the x digital subscriber line module, configured to report a notification message used for indicating network connection success to the detecting module when being connected to the network successfully, and after the first establishing module establishes the connection between the service terminal and the x digital subscriber line module, make the service terminal access the network through the x digital subscriber line module; and
the 3G data card module, configured to make the service terminal access the network through the 3G data card module after the second establishing module establishes the connection between the service terminal and the 3G data card module.

7. The device for network access according to claim 6, wherein the first establishing module is specifically configured to enable a connection between the service terminal and the x digital subscriber line module in an intelligent switch manner when the detection result of the detecting module is that the notification message is received within the set time.

8. The device for network access according to claim 6, wherein the second establishing module is specifically configured to enable a connection between the service terminal and the 3G data card module in an intelligent switch manner when the detection result of the detecting module is that the notification message is not received within the set time.

9. The device for network access according to claim 6 or 7 or 8, wherein:
the detecting module is further configured to notify the second establishing module if a notification message that is reported by the x digital subscriber line module and
used for indicating network connection failure is received, after the first establishing module establishes the connection between the service terminal and the x digital subscriber line module; and
the second establishing module is configured to establish the connection between the service terminal and the 3G data card module when the notification is received, so that the service terminal accesses the network through the 3G data card module. 10. The device for network access according to claim 9, further comprising:
a prompting module, configured to give the service terminal a prompt whether the network is to be accessed in a wireless manner, if the detecting module does not receive a notification message within the set time, wherein the notification message is reported by the x digital subscriber line module and used for indicating network connection success, or if the detecting module receives a notification message that is reported by the x digital subscriber line module and used for indicating network connection failure; wherein
the second establishing module is connected to the prompting module, and specifically configured to establish the connection between the service terminal and the 3G data card module when the prompting module receives a wireless access confirmation instruction entered by the service terminal, so that the service terminal accesses the network through the 3G data card module.
